# EUROPÄISCHE PATENTSCHRIFT

(11) **EP 2 165 894 B1**
(45) Veröffentlichungstag und Bekanntmachung des Hinweises auf die Patenterteilung: **13.04.2016**
(21) Anmeldenummer: 09011799.5
(22) Anmeldetag: 16.09.2009
(51) Int. Cl.: B60T 7/12, B60T 8/32, B60T 11/10, B60T 17/16

(54) **Kraftfahrzeug mit Antriebsmotor, Bremseinrichtung und Steuergerät**
Motor vehicle with drive motor, braking device and control device
Véhicule automobile doté d'un moteur d'entraînement, dispositif de freinage et appareil de commande

(30) Priorität: 20.09.2008 DE 102008048179
(43) Veröffentlichungstag der Anmeldung: 24.03.2010
(73) Patentinhaber: GM Global Technology Operations LLC, Detroit, MI 48265-3000 (US)
(72) Erfinder: Bonne, Uwe, 65830 Kriftel (DE)
(74) Vertreter: Spitzfaden, Ralf

(56) Entgegenhaltungen:
- EP-A1- 0 992 386
- WO-A1-02/46007
- WO-A1-2004/039647
- WO-A1-2006/128651
- DE-A1-102006 060 890
- GB-A- 2 311 345
- US-A1- 2002 189 882
- US-A1- 2005 270 177

## Beschreibung

Die Erfindung betrifft ein Verfahren zum Betreiben eines Kraftfahrzeuges, welches einen Antriebsmotor, eine über ein Bremspedal betätigbare Bremseinrichtung und ein Steuergerät umfasst, wobei bei laufendem Antriebsmotor und nicht betätigtem Bremspedal durch ein Öffnen einer Fahrertür die Bremseinrichtung mittels des Steuergerätes selbsttätig aktiviert wird.

Kraftfahrzeuge verfügen über einen Antriebsmotor, wie eine Verbrennungskraftmaschine, der mit Hilfe einer Zündung aktivierbar ist. Weiterhin sind die Kraftfahrzeuge mit einer Bremseinrichtung ausgestattet, die mittels eines Bremspedals betätigbar ist. Ebenso ist eine Feststellbremse vorgesehen, die üblicherweise mit einem mittig angeordneten Handbremshebel oder einem Feststellbremspedal feststellt wird, um ein Wegrollen des Kraftfahrzeugs im abgestellten Zustand zu vermeiden.

Bei laufendem Antriebsmotor und falls ein Übersetzungsgetriebe zwischen Antriebsmotor und angetriebenen Rädern auf Leerlauf gestellt ist, besteht die Gefahr, dass das Kraftfahrzeug, besonders wenn ein Fahrer das Kraftfahrzeug verlässt, unkontrolliert wegrollt. Des Weiteren kann das Kraftfahrzeug bei einer eingelegten Fahrstufe und nicht betätigtem Bremspedal unkontrolliert anfahren, falls der Fahrer nicht gleichzeitig das Bremspedal oder zumindest die Feststellbremse betätigt hat.

Zur Vermeidung einer potentiell verkehrsgefährdenden Situation ist es aus der DE 10 2005 024 834 B3 bei einem Kraftfahrzeug bekannt, bei eingeschalteter Zündung eine Feststellbremse selbsttätig mit zwei unterschiedlichen Spannkräften einzustellen, um ein unbeabsichtigtes Losrollen des Kraftfahrzeugs zu vermeiden. Dabei kann auch eine Anwesenheit des Fahrers überprüft werden, um bei dessen Abwesenheit ebenfalls die Feststellbremse selbsttätig zu aktivieren. Die Abwesenheit des Fahrers ist unter anderem durch das Öffnen einer Fahrertür zu ermitteln.

Weiterhin offenbart die DE 100 61 007 A1 ein Verfahren zum Betrieb eines Kraftfahrzeugs, bei dem die Feststellbremse im Stillstand bei laufendem Antriebsmotor und einer geöffneten Fahrertür selbsttätig aktiviert wird.

Bei den bekannten Kraftfahrzeugen ist es zwar möglich, durch das Öffnen der Fahrertür bei laufendem Antriebsmotor eine Feststellbremse selbsttätig zu aktivieren, jedoch kann diese aufgrund von Wartungsmängeln oder Verschleiß unter Umständen nicht ausreichende Haltekräfte aufbringen, um besonders auf Gefällstrecken oder bei einer eingelegten Fahrstufe, das heißt, wenn der Antriebsmotor das Kraftfahrzeug antreibt, ein Wegrollen oder Anfahren des Kraftfahrzeugs wirkungsvoll zu unterbinden.

Ein gattungsgemäßes Verfahren zum Betreiben eines Kraftfahrzeuges ist aus der EP 0 992 386 A1 bekannt.

Es ist Aufgabe der Erfindung, ein Verfahren der eingangs genannten Art zu schaffen, bei dem nach einem selbsttätigen Aktivieren der Bremseinrichtung in Folge eines Öffnens der Fahrertür bei laufendem Antriebsmotor und nicht betätigtem Bremspedal diese Aktivierung in bedienungstechnisch einfacher Weise aufgehoben wird, ohne dass es zu einem unbeabsichtigten Losrollen oder Anfahren des Kraftfahrzeuges kommt.

Erfindungsgemäß wird die Aufgabe mit einem Verfahren gelöst, welches die Merkmale des Anspruchs 1 aufweist. Ferner ist zur Lösung der Aufgabe ein Kraftfahrzeug mit den Merkmalen des Anspruchs 10 vorgesehen.

Bei einem Kraftfahrzeug, bei dem bei laufendem Motor und nicht betätigtem Bremspedal durch ein Öffnen einer Fahrertür die Bremseinrichtung selbsttätig aktivierbar ist, wird bei laufendem Antriebsmotor vorzugsweise von einem zentralen Steuergerät, das mit allen Komponenten des Kraftfahrzeugs in Verbindung steht, um diese zu steuern, beispielsweise mit Hilfe eines Türschlosssensors überprüft, ob die Fahrertür des Kraftfahrzeugs korrekt verschlossen ist. Sollte dies nicht der Fall sein, das heißt, wenn der Fahrer die Fahrertür aktiv geöffnet hat, wird weiterhin vom Steuergerät überprüft, ob das Bremspedal zum Ansteuern der Bremseinrichtung betätigt beziehungsweise gedrückt ist oder nicht. Ist das Bremspedal gedrückt, so wird vom Fahrer selbst vermieden, dass das Kraftfahrzeug wegrollen kann. Ist das Bremspedal hingegen nicht gedrückt, könnte das Kraftfahrzeug unbeabsichtigt losrollen, was beispielsweise in Parkhäusern auftritt, in denen der Fahrer ein Parkticket am Ausgang in ein Zugangskontrollsystem einführen muss. Hat der Fahrer den Abstand zu dem Zugangskontrollsystem falsch gewählt, dann muss er häufig die Fahrertür öffnen, um sich ausreichend weit zum Ergreifen oder Einschieben eines Parktickets hinauslehnen zu können. Betätigt er dabei das Bremspedal nicht, kann bei laufendem Antriebsmotor das Kraftfahrzeug wegrollen, wodurch für den Fahrer bei geöffneter Fahrertür ein erhebliches Verletzungsrisiko besteht. Dies wird durch die selbsttätige Überwachung durch das Steuergerät vermieden.

Ein unbeabsichtigtes Losrollen des Kraftfahrzeuges kann sich auch im Zusammenhang mit einer so genannten autonomen Vollbremsung des Kraftfahrzeugs ergeben, die sensorgesteuert, beispielsweise beim Auftreffen des Kraftfahrzeugs auf ein Hindernis oder eine Person, ausgelöst wird. Steigt der Fahrer nach einer solchen autonomen Vollbremsung aus dem Kraftfahrzeug aus, um die Ursache oder die Folge der autonomen Vollbremsung zu begutachten, kann es vorkommen, dass die Bremseinrichtung, beispielsweise durch eine Verzögerungsschaltung oder aufgrund der Sensorsteuerung, noch aktiviert ist und der Fahrer vergisst, das Kraftfahrzeug ordnungsgemäß abzustellen. Öffnet der Fahrer die bei laufendem Motor nach der autonomen Vollbremsung die Fahrertür und steigt aus dem Kraftfahrzeug aus, wonach keine Betätigung des Bremspedals vorliegen kann, ist in jedem Fall die Bremseinrichtung selbsttätig aktivierbar und ein Wegrollen des Kraftfahrzeugs verhindert.

Dabei wird die Bremseinrichtung selbst angesteuert oder aktiviert und nicht nur die üblicherweise mit geringeren Haltekräften ausgestattete Feststellbremse, wobei sogar im Falle einer eingelegten Fahrstufe das unkontrollierte Anfahren des Kraftfahrzeugs vermieden ist.

Der Vorteil der Erfindung besteht darin, dass lediglich bereits im Kraftfahrzeug vorhandene Komponenten, wie ein Türschlosssensor, ein Bremspedalsensor sowie das zentrale Steuergerät in geringfügiger Weise hard- und/oder softwaremäßig modifiziert werden müssen, um die gewünschte Funktionalität zu erfüllen. Somit ist der Aufwand bei der Herstellung des Kraftfahrzeugs praktisch kaum erhöht, dessen passive Sicherheit jedoch wesentlich verbessert.

Bevorzugt ist das Kraftfahrzeug mit einem Fahrassistenz-System in Form eines elektronischen Stabilitätsprogramms (ESP) ausgestattet. Das Fahrassistenz-System greift selbsttätig in den normalen Fahrtbetrieb des Kraftfahrzeugs ein, um beispielsweise bei einer zu schnellen Kurvenfahrt ein Ausbrechen des Kraftfahrzeugs zu vermeiden. Zur selbsttätigen Aktivierung der Bremseinrichtung bei geöffneter Fahrertür und laufendem Antriebsmotor kann die Pumpe zur Erhöhung des Bremsdrucks durch das ESP angesteuert werden.

Befindet sich der Fahrer trotz geöffneter Fahrertür nach wie vor im Kraftfahrzeug, kann er durch ein eigenes Betätigen des Bremspedals die selbsttätig vorgenommene Aktivierung der Bremseinrichtung aufheben, die nicht mehr notwendig ist, da er selbst das Bremspedal drückt.

In gleicher Weise kann die Aktivierung der Bremseinrichtung durch ein Betätigen eines Gaspedals aufgehoben werden. Möchte der Fahrer beispielsweise am Zugangskontrollsystem an der Ausfahrt des Parkhauses etwas nach vorne rollen, um das Parkticket einführen zu können, betätigt er das Gaspedal und gleichzeitig wird die Bremseinrichtung gelöst.

In weiterer Ausgestaltung bleibt trotz eines Schließens der Fahrertür die Bremseinrichtung weiterhin aktiviert. Dies ist besonders dann von Vorteil, wenn der Fahrer das Kraftfahrzeug verlassen hat und das leere Kraftfahrzeug gegen ein Wegrollen gesichert werden muss.

Ist die Bremseinrichtung selbsttätig aktiviert worden, wird zweckmäßigerweise nach einem vorzugsweise einstellbaren Zeitraum, z.B. 30 Sekunden, der Antriebsmotor selbsttätig vom Steuergerät abgestellt. Dies verringert zum einen den Kraftstoffverbrauch und zum anderen ist eine Überlastung der Bremseinrichtung, insbesondere einer Pumpe zum Aufrechterhalten eines notwendigen Bremsdrucks, vermieden. Besonders, wenn sich der Fahrer außerhalb des Kraftfahrzeugs aufhält, ist zudem üblicherweise davon auszugehen, dass ein weiter laufender Antriebsmotor nicht notwendig ist.

Zusätzlich wird, insbesondere bei einem Automatikgetriebe, eine Fahrstufe beziehungsweise eine Parksicherung selbsttätig eingelegt. Unter anderem kann ein automatisches Getriebe selbsttätig die Parkstufe "P" einlegen oder beispielsweise den ersten Gang, um so das Losrollen des Kraftfahrzeugs zu vermeiden.

Weiterhin kann eine elektronische Parkbremse selbsttätig aktiviert werden, die ebenfalls verhindert, dass sich das Kraftfahrzeug selbsttätig bewegt. Die elektromechanische Parkbremse ist mit einer konventionellen Handbremse kaum zu vergleichen. Die elektromechanische Parkbremse weist aufgrund ihrer Verschleißfestigkeit eine dauerhaft konstante Bremswirkung auf, und ist mittels eines elektrischen Schalters, der den herkömmlichen Handbremshebel ersetzt, zu aktivieren. Beim Losfahren löst sich die Parkbremse selbsttätig. Selbstverständlich kann im Fall des abgeschalteten Antriebsmotors auch eine ebenfalls im Kraftfahrzeug vorhandene Feststellbremse selbsttätig aktiviert werden.

Bei einer Weiterbildung wird die Anwesenheit eines Fahrers auf dem Fahrersitz überprüft und bei dessen Abwesenheit wird selbsttätig die Bremseinrichtung aktiviert. Die Anwesenheit des Fahrers kann beispielsweise mit einem Bilderfassungssystem oder einem Sitzbelegungssensor überwacht werden.

Selbstverständlich kann die Funktionalität auch von einem Fahrer, wenn er dies wünscht, unterdrückt werden. Hierzu kann er z.B. einen entsprechend markierten Schalter am Armaturenbrett drücken.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

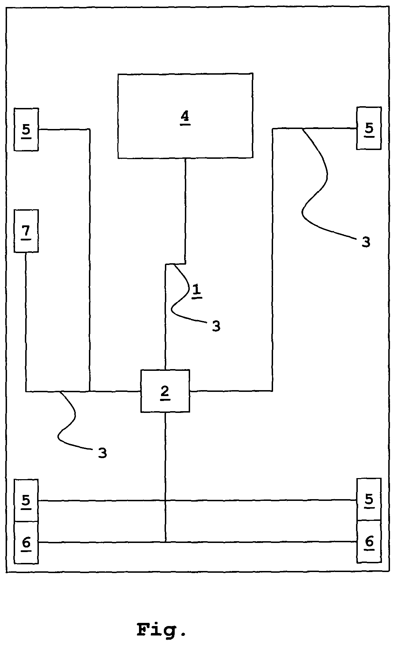

Die Erfindung wird im Folgenden anhand eines Ausführungsbeispiels mit Bezugnahme auf die Zeichnung näher erläutert. Die einzige Figur der Zeichnung zeigt ein erfindungsgemäßes Kraftfahrzeug in schematischer Draufsicht.

Das Kraftfahrzeug 1 ist mit einem zentralen Steuergerät 2 zur Steuerung aller Funktionen des Kraftfahrzeugs 1 ausgestattet. Hierzu steht das Steuergerät 2 über Verbindungen 3 mit den verschiedenen Komponenten des Kraftfahrzeugs 1 in Verbindung.

Weiterhin verfügt das Kraftfahrzeug 1 über einen Antriebsmotor 4, wie eine Verbrennungskraftmaschine, sowie über eine Bremseinrichtung 5, die vorzugsweise auf Vorder- und Hinterräder des Kraftfahrzeugs 1 einwirkt, um eine gewünschte Verzögerung zu erzielen. Die Bremseinrichtung 5 wird durch das Drücken eines Bremspedals aktiviert. Des Weiteren ist eine Feststellbremse 6 vorgesehen, die separat von einem Fahrer, beispielsweise über einen mittig angeordneten Handbremshebel, aktiviert werden kann. Die Feststellbremse 6 dient üblicherweise zur Sicherung des Kraftfahrzeugs 1 im abgestellten Zustand vor einem Wegrollen.

Ist der Antriebsmotor 4 in Betrieb und wird, beispielsweise über einen Türschlosssensor 7, festgestellt, dass die Fahrertür des Kraftfahrzeugs 1 offen ist und weiterhin das Bremspedal der Bremseinrichtung 5 nicht betätigt ist, dann wird vom Steuergerät 2 selbsttätig die Bremseinrichtung 5 aktiviert, um ein unbeabsichtigtes und unerwünschtes Losrollen oder Anfahren des Kraftfahrzeugs 1 zu unterbinden.

Dauert dieser Zustand über einen längeren und vorzugsweise einstellbaren Zeitraum an, beispielsweise 30 Sekunden, so wird der Antriebsmotor 4 zur Senkung des Kraftstoffverbrauchs abgeschaltet und die Feststellbremse 6 ebenfalls selbsttätig aktiviert. Ebenso kann, besonders bei einem Automatikgetriebe, entweder eine Fahrstufe oder eine Parkstufe selbsttätig eingelegt werden, um das Kraftfahrzeug 1 zusätzlich vor einem Wegrollen zu sichern.

## Patentansprüche

1. Verfahren zum Betreiben eines Kraftfahrzeuges, welches einen Antriebsmotor (4), eine über ein Bremspedal betätigbare Bremseinrichtung (5) und ein Steuergerät (2) umfasst, wobei bei laufendem Antriebsmotor (4) und nicht betätigtem Bremspedal durch ein Öffnen einer Fahrertür die Bremseinrichtung (5) mittels des Steuergerätes (2) selbsttätig aktiviert wird, **dadurch gekennzeichnet, dass** durch ein Betätigen des Bremspedals die Aktivierung der Bremseinrichtung (5) aufgehoben wird.

2. Verfahren nach Anspruch 1, **dadurch gekennzeichnet, dass** das Kraftfahrzeug (1) mit einem Fahrassistenz-System, insbesondere einem ESP, ausgestattet ist.

3. Verfahren nach Anspruch 1 oder 2, **dadurch gekennzeichnet, dass** durch ein Betätigen eines Gaspedals die Aktivierung der Bremseinrichtung (5) aufgehoben wird.

4. Verfahren nach einem der Ansprüche 1 bis 3, **dadurch gekennzeichnet, dass** bei einem Schließen der Fahrertür die Aktivierung der Bremseinrichtung (5) aufrecht erhalten bleibt.

5. Verfahren nach einem der Ansprüche 1 bis 4, **dadurch gekennzeichnet, dass** nach einem vorzugsweise einstellbaren Zeitraum der Antriebsmotor (4) abgestellt wird.

6. Verfahren nach Anspruch 5, **dadurch gekennzeichnet, dass** eine Fahrstufe eines Getriebes selbsttätig eingelegt wird.

7. Verfahren nach Anspruch 5 oder 6, **dadurch gekennzeichnet, dass** eine elektronische Parkbremse aktiviert wird.

8. Verfahren nach einem der Ansprüche 5 bis 7, **dadurch gekennzeichnet, dass** eine Feststellbremse (6) selbsttätig aktiviert wird.

9. Verfahren nach einem der Ansprüche 1 bis 8, **dadurch gekennzeichnet, dass** eine Anwesenheit eines Fahrers überprüft wird und bei dessen Abwesenheit die Bremseinrichtung (5) selbsttätig aktiviert wird.

10. Kraftfahrzeug, umfassend einen Antriebsmotor (4), eine über ein Bremspedal betätigbare Bremseinrichtung (5) und ein Steuergerät (z), betrieben mit einem Verfahren nach einem der vorhergehenden Ansprüche.

## Claims

1. A method for operating a motor vehicle, which comprises a drive engine (4), a brake device (5) that can be actuated via a brake pedal, and a control unit (2), wherein the brake device (5) is automatically activated by means of the control unit (2) when the drive engine (4) is running and the brake pedal is not actuated, **characterized in that** the activation of the brake device (5) is cancelled by actuating the brake pedal.

2. A method according to claim 1, **characterized in that** the motor vehicle (1) is equipped with a driver assistance system, especially ESP.

3. A method according to claim 1 or 2, **characterized in that** the activation of the brake device (5) is cancelled by actuating an accelerator pedal.

4. A method according to one of the claims 1 to 3, **characterized in that** the activation of the brake device (5) is maintained when the driver door is closed.

5. A method according to one of the claims 1 to 4, **characterized in that** the drive engine (4) is shut down after a preferably adjustable period of time.

6. A method according to claim 5, **characterized in that** a gear selection of a transmission is engaged automatically.

7. A method according to claim 5 or 6, **characterized in that** an electronic handbrake is activated.

8. A method according to one of the claims 5 to 7, **characterized in that** a parking brake (6) is activated automatically.

9. A method according to one of the claims 1 to 8, **characterized in that** a presence of a driver is checked and the brake device (5) is activated automatically in the absence of the driver.

10. A motor vehicle, comprising a drive engine (4), a brake device (5) that can be actuated via a brake pedal, and a control unit (2), operated by a method according to one of the preceding claims.

## Revendications

1. Procédé pour faire fonctionner un véhicule à moteur possédant un moteur de propulsion (4), une installation de freinage (5) pouvant être actionnée à l'aide d'une pédale de frein et une unité de commande (2), dans lequel, lorsque le moteur de propulsion (4) fonctionne et que la pédale de frein n'est pas actionnée, l'ouverture d'une porte du conducteur provoque l'activation automatique de l'installation de freinage (5) au moyen de l'unité de commande (2), **caractérisé en ce qu'**un actionnement de la pédale de frein inhibe l'activation de l'installation de freinage (5).

2. Procédé selon la revendication 1, **caractérisé en ce que** le véhicule à moteur (1) est équipé d'un système d'assistance à la conduite, en particulier d'un ESP.

3. Procédé selon la revendication 1 ou 2, **caractérisé en ce qu'**un actionnement d'une pédale d'accélérateur inhibe l'activation de l'installation de freinage (5).

4. Procédé selon l'une des revendications 1 à 3, **caractérisé en ce que** l'activation de l'installation de freinage (5) est maintenue lors de la fermeture de la porte du conducteur.

5. Procédé selon l'une des revendications 1 à 4, **caractérisé en ce que** le moteur de propulsion (4) est arrêté après un intervalle de temps réglable.

6. Procédé selon la revendication 5, **caractérisé en ce qu'**un rapport d'une transmission est passé automatiquement.

7. Procédé selon la revendication 5 ou 6, **caractérisé en ce qu'**un frein de stationnement électronique est activé.

8. Procédé selon l'une des revendications 5 à 7, **caractérisé en ce qu'**un frein d'immobilisation (6) est activé automatiquement.

9. Procédé selon l'une des revendications 1 à 8, **caractérisé en ce que** la présence d'un conducteur est vérifiée et si celui-ci est absent, l'installation de freinage (5) est activée automatiquement.

10. Véhicule à moteur comprenant un moteur de propulsion (4), une installation de freinage (5) pouvant être actionnée à l'aide d'une pédale de frein et une unité de commande (2), fonctionnant suivant un procédé selon l'une des revendications précédentes.
